# EUROPÄISCHE PATENTSCHRIFT

(11) **EP 3 191 299 B1**
(45) Veröffentlichungstag und Bekanntmachung des Hinweises auf die Patenterteilung: **10.10.2018**
(21) Anmeldenummer: 15759634.7
(22) Anmeldetag: 13.08.2015
(51) Int. Cl.: B32B 7/12, B32B 27/08, B32B 27/30, B32B 27/32, B32B 27/36, B32B 3/26, B32B 3/30, B26F 1/26, B32B 37/00, B29C 51/10, B29C 63/02, C23F 11/02

(54) **ANORDNUNG ZUM KORROSIONSSCHUTZ**
CORROSION PROTECTIVE ARRANGEMENT
ENSEMBLE AVEC PROTECTION CONTRE LA CORROSION

(30) Priorität: 13.09.2014 DE 102014013288
(43) Veröffentlichungstag der Anmeldung: 19.07.2017
(73) Patentinhaber: RKW SE, 67227 Frankenthal (DE)
(72) Erfinder: EUBELER, Jan, 67229 Grosskarlbach (DE); WACHS, Tilo, 53424 Remagen (DE); MEIER, Leonhard, 83547 Babensham (DE); VOGGENAUER, Robert, 83512 Wasserburg (DE)
(74) Vertreter: Busch, Tobias
(86) Internationale Anmeldenummer: PCT/EP2015/001672
(87) Internationale Veröffentlichungsnummer: WO 2016/037682

(56) Entgegenhaltungen:
- EP-A1- 2 347 897
- WO-A1-02/102592
- DE-A1- 3 723 404
- KR-A- 20090 015 192
- KR-B1- 100 809 266

## Beschreibung

Die Erfindung betrifft Anordnung zum Korrosionsschutz mit einer Klebstoffschicht, die mindestens einen flüchtigen Korrosionsinhibitor enthält, wobei die Klebstoffschicht auf einer Fläche haftet und die Klebstoffschicht eine Deckschicht mit der Fläche verbindet, wobei die Deckschicht eine Vielzahl von Öffnungen zur Abgabe des flüchtigen Korrosionsinhibitors aufweist.

Flüchtige Korrosionsinhibitoren werden auch als "Volatile Corrosion Inhibitors" (VCI) bezeichnet. Es handelt sich dabei um Substanzen, die aus der Dampfphase heraus metallische Werkstoffe vor Korrosion schützen. Flüchtige Korrosionsinhibitoren entfalten ihre Wirkung an der Metalloberfläche, an der sie adsorbiert werden und eine Schutzschicht gegen die Einwirkungen von Sauerstoff und/oder Wasser ausbilden. Sie zeichnen sich durch einen hohen Dampfdruck bei relativ niedrigen Temperaturen aus.

Als flüchtige Korrosionsinhibitoren können z. B. Salze eingesetzt werden, die allmählich ausgasen, beispielsweise Nitrit-Verbindungen oder Aminsalze wie Dicyclohexylamin-Benzoat oder Diethanolamin-Nitrit. Wird das zu schützende Werkstück von einer Verpackung umschlossen, stellt sich eine mit dem Inhibitor gesättigte Atmosphäre ein. Nach dem Entpacken des Werkstückes verflüchtigt sich der Inhibitor ohne Rückstände.

Es sind Anordnungen zum Korrosionsschutz bekannt, bei denen VCI-Wirkstoffe unmittelbar auf Flächen wie Kunststofffolien, Papieren, Pappen oder Verbundmaterialien aufgebracht werden. Die Korrosionsinhibitoren werden bei diesen Anordnungen meist sehr schnell wieder abgegeben. Dies führt zu einem schnellen und zunächst wirksamen Korrosionsschutz, der jedoch nicht lange anhält.

Die EP 0 825 019 A2 beschreibt eine Anordnungen zum Korrosionsschutz bei der ein Korrosionsinhibitor in einen Kleber eingebracht wird. Der Korrosionsinhibitor wird zu dem Heißschmelzklebstoff gegeben, um eine als Vliesstoff ausgeführte Deckschicht auf einer als Schrumpffolie ausgeführten Fläche zu fixieren.

Die EP 2 457 726 A1 beschreibt eine Anordnung zum Korrosionsschutz mit einer Klebstoffschicht, die mindestens einen flüchtigen Korrosionsinhibitor enthält, wobei die Klebstoffschicht auf einer Fläche haftet und die Klebstoffschicht eine Deckschicht mit der Fläche verbindet. Die Fläche wird von einer Polyethylenfolie gebildet. Die Deckschicht wird von einem Vliesstoff gebildet. Der Vliesstoff besteht aus einem Spinnvlies aus Polypropylen.

In der EP 2 184 162 A1 wird eine Anordnung für den temporären Korrosionsschutz von Baustahlteilen beschrieben. Als Fläche dient eine Polypropylenfolie. Als Deckschicht wird ein Nonwoven eingesetzt. Die Fläche und die Deckschicht werden mit einem VCI-haltigen Klebstoff verbunden.

In der EP 2 615 145 A2 wird ein Verfahren zur Herstellung eines Verpackungsmaterials für korrosionsanfällige Gegenstände aus Metall beschrieben. Auf eine Fläche, die als Kunststofffolie ausgebildet ist, wird eine Klebestoffschicht aufgetragen. Sie enthält einen flüchtigen Korrosionsinhibitor (VCI) enthält. Unter Verwendung des VCI-haltigen Klebestoffs wird eine gasdurchlässige Deckschicht auf die Kunststofffolie kaschiert, so dass der Klebstoff zwischen einer kunststofffolienseitigen Fläche der Deckschicht eingebettet ist und die Schichten miteinander verbindet. Die Deckschicht kann aus einem textilen Material oder einer porösen bzw. perforierten Folie bestehen. Der Klebstoff dringt in die Deckschicht ein.

EP2347897 offenbart eine Anordnung zum Korrosionsschutz mit einer Klebstoffschicht, die einen flüchtigen Korrosionsinhibitor enthält, wobei die Klebstoffschicht auf einer Polyethylenfolie haftet und die Klebstoffschicht eine mikroporöse Polyethylen Innenschicht mit der Polyethylenfolie verbindet.

Aufgabe der Erfindung ist es, eine Anordnung zum Korrosionsschutz anzugeben, bei welcher der Korrosionsinhibitor aus der Klebstoffschicht über einen möglichst langen Zeitraum abgegeben wird. Zudem soll vermieden werden, dass die korrosionsanfälligen Gegenstände in direkten Kontakt mit den Inhibitoren kommen. Die Korrosionsinhibitoren sollen eine möglichst hohe Effizienz entfalten. Weiterhin soll sich die Anordnung durch eine hohe Zuverlässigkeit und eine stabile Struktur auszeichnen. Auch soll die Anordnung auf potentielle Kunden ansprechend wirken und preiswert zu fertigen sein.
Diese Aufgabe wird erfindungsgemäß durch eine Anordnung mit den Merkmalen des Anspruchs 1 gelöst und einem Verfahren zur Herstellung einer solchen Anordnung mit den Merkmalen des Anspruchs 13 Bevorzugte Varianten sind in den Unteransprüchen ausgeführt.
Erfindungsgemäß weist die Deckschicht Ausstülpungen auf, die aus einer Ebene der Deckschicht um eine Höhe hervorragen. Durch diese Ausstülpungen werden Abstandshalter zur Klebstoffschicht geschaffen. Durch diese Konstruktion wird besonders wirksam ein Kontakt der korrosionsanfälligen Gegenstände mit der Klebstoffschicht verhindert, welche die Korrosionsinhibitoren enthält.

In der Erfindung bilden die Ausstülpungen Öffnungen. Dazu weist jede Ausstülpung eine Wandung auf, die einen Hohlraum bildet und eine Öffnung umschließt. Bei dieser Art von Ausstülpungen kann es sich um zylinderartige, kegelförmige und/oder hyperboloide Gebilde handeln, die aus der Ebene der Deckschicht emporragen und deren Ränder die Öffnungen bilden, aus denen die flüchtigen Korrosionsinhibitoren austreten. Vorzugsweise handelt es sich um langgestreckte, tunnelartige Kapillaren, durch die der Korrosionsinhibtor wandert.
Durch die Wandungen der Ausstülpungen werden Schnorchel gebildet, die Inhibitoren von der Klebstoffschicht zu der Öffnung führen. Die Hohlräume schützen vor Einwirkungen, beispielsweise einer Luftströmung, sodass sich der korrosionshemmende Wirkstoff zunächst in den kapillarartigen Hohlräumen ansammeln kann. Dies führt zu einer verbesserten Wirksamkeit.

In der Erfindung werden die Ausstülpungen in der Deckschicht erzeugt, indem thermoplastisches Material über ein Element geführt wird, das Löcher aufweist. Vorzugsweise handelt es sich bei dem Element um eine rotierende Walze. Die Walze weist Bohrungen als Löcher auf. Mittels einer Unterdruckvorrichtung wird eine Druckdifferenz erzeugt, sodass das thermoplastische Material in die Löcher gezogen wird. Dabei kommt es zu einem Ausdünnen des thermoplastischen Materials im Bereich der Löcher, so dass sich Öffnungen in der Deckschicht bilden. Dadurch bildet sich eine Deckschicht mit Ausstülpungen unter Erkaltung des thermoplastischen Materials aus. Diese vakuumperforierte Deckschicht wird mit einer Fläche über eine wirkstoffhaltige Klebstoffschicht verbunden.

Das thermoplastische Material kann in unterschiedlicher Weise über das Element geführt werden. Bei einer Variante wird das thermoplastische Material als Schmelze auf das Element extrudiert. Dabei wird der thermoplastische Polymerfilm im schmelzflüssigen Zustand einer Vakuumperforationsvorrichtung zugeführt. Der Polymerfilm wird durch eine Unterdruckvorrichtung in die Löcher eingesaugt, wobei die Polymerschmelze langgestreckte Hohlräume in Form von Kapillaren ausbildet. Nach Abkühlung des Films wird die vakuumperforierte Deckschicht abgenommen und mittels einer Klebeschicht mit einer weiteren Schicht verbunden.

Bei einer anderen Variante des Verfahrens wird eine thermoplastische Folie erwärmt und über ein Element geführt, das Löcher aufweist. Auch hier wird ein Unterdruck angelegt. Die erwärmte Folie wird im Bereich der Löcher eingezogen, sodass sich Ausstülpungen bilden, die eine Wandung aufweisen, welche einen langgestreckten Hohlraum bilden und eine Öffnung umschließen.

Die Höhe der Ausstülpung ist vorzugsweise um den Faktor 5, insbesondere um den Faktor, 10 größer als die Dicke der Ebene der Deckschicht. Die Höhe der Ausstülpung beträgt vorzugsweise mehr als 100 µm, insbesondere mehr als 300 µm. Dadurch entstehen langgestreckte Kapillaren mit einem luftgefüllten Hohlraum, in dem sich der korrosionshemmende Wirkstoff anreichert. Die Höhe der Ausstülpungen beträgt vorzugsweise weniger als 1500 µm, insbesondere weniger als 1000 µm.

Die Ausstülpungen können kegelförmig ausgebildet sein, so dass der engste Querschnitt vom äußeren Rand der Ausstülpung gebildet wird. Es können auch zylindrische Ausstülpungen gebildet werden, bei denen der Querschnitt des Hohlraums weitgehend konstant bleibt.

Bei einer besonders vorteilhaften Ausführung der Erfindung weisen die Ausstülpungen Einschnürungen auf. Ausgehend von einem engsten Querschnitt erweitert sich der freie Querschnitt des Hohlraums zur Öffnung hin.

Bei einer Variante der Erfindung liegt die Ebene der Deckschicht auf der Klebstoffschicht auf, und die Ausstülpungen ragen von der Klebstoffschicht nach außen weg. Aus der Klebstoffschicht treten die flüchtigen Korrosionsinhibitoren in die Hohlräume der Ausstülpungen und treten dann durch Öffnungen aus, die vom äußern Rand der Ausstülpungen gebildet werden.

Bei einer alternativen Variante der Erfindung ist die Ebene der Deckschicht beabstandet zur Klebstoffschicht angeordnet. Die Ausstülpungen ragen von der Ebene der Deckschicht zur Klebstoffschicht hin. Die Öffnungen liegen in der Ebene der Deckschicht, während die Ränder der Ausstülpungen zur Klebstoffschicht ragen. Bei dieser Variante der Erfindung werden Räume zwischen benachbarten Ausstülpungen gebildet, in denen sich der korrosionshemmende Wirkstoff anreichert.

Vorzugsweise weist der äußere Rand der Ausstülpungen eine unregelmäßig gelappte und/oder gefaltete Form auf. Dadurch kann aus den Räumen zwischen benachbarten Ausstülpungen wirkstoffreiche Luft in die Hohlräume der Ausstülpungen diffundieren und von dort durch die Öffnungen austreten.

Bei der Herstellung der Anordnung wird der Klebstoff als Klebstoffschicht auf die Deckschicht und/oder die Fläche aufgebracht. Der Klebstoff kann auf eine als geschlossene Trägerschicht ausgebildete Fläche aufgebracht werden, beispielsweise mit einer Rasterwalze. Auch kann der Klebstoff auf die Trägerschicht gerackelt werden. Die Trägerschicht und die Deckschicht werden dann über die Kleberschicht miteinander kaschiert.

Aufgrund der verhältnismäßig hohen Ausstülpungen wird eine besonders angenehme Haptik, eine sogenannte "soft touch"-Haptik, erzielt.

Die Klebstoffschicht dient zum einen als Träger für die flüchtigen Korrosions-Verhinderer und verbindet gleichzeitig die Deckschicht der Fläche. Bei einer besonders günstigen Variante der Erfindung wird die Klebstoffschicht von einem auf Isocyanaten basierenden Klebstoff gebildet wird, die einen flüchtigen Korrosionsinhibitor (VCI) enthält.

Die Klebstoffschicht haftet auf einer Fläche. Dabei kann es sich um die Oberfläche eines Gegenstandes handeln.

Auch kann die Fläche von einer weiteren Deckschicht gebildet werden, die ebenfalls Öffnungen aufweist. Bei dieser Variante der Erfindung verbindet die Klebstoffschicht zwei Deckschichten miteinander. Dabei handelt es sich um einen Verbund mit einer mittigen Klebstoffschicht und zwei äußeren Deckschichten. Somit kann zu zwei Seiten ein Korrosionsinhibitor aus der Klebstoffschicht über die Öffnungen in den Deckschichten abgegeben werden.

Bei einer besonders vorteilhaften Variante der Erfindung handelt es sich bei der Fläche um eine geschlossene Trägerschicht, vorzugsweise um eine Folie aus Polyethylen, Polypropylen, Polystryrol, Polyethylenterephthalaten, Polyvinylchlorid, Polylactid, thermoplastischen Polyurethan oder beschichtetem Zellglas sowie Blends.

Die Klebstoffschicht verbindet bei dieser Variante die Trägerschicht mit der Deckschicht. Bei einer Variante der Erfindung haftet auf beiden Seiten einer Trägerschicht eine Klebstoffschicht, wobei jede Klebstoffschicht jeweils eine Deckschicht mit der Trägerschicht verbindet. Dabei handelt es sich um einen Verbund bei dem die Trägerschicht mittig zwischen zwei Klebstoffschichten und zwei äußeren Deckschichten angeordnet ist. Somit kann der korrosionshemmende Wirkstoff zu zwei Seiten aus den Kleberschichten über die Öffnungen in den Deckschichten abgegeben werden.

Bei der erfindungsgemäßen Anordnung wird die Deckschicht über die Klebstoffschicht dauerhaft mit der Fläche verbunden ist. Beim Einsatz der Anordnung verbleibt die Deckschicht auf der Klebstoffschicht und schützt während der Anwendung die korrosionsanfälligen Gegenstände und den Anwender vor direkten Kontakt mit der Klebstoffschicht. Weiterhin wird ein Austrocknen der Klebstoffschicht verhindert. Zur Migration des Korrosionsinhibitors aus der Klebstoffschicht weist die Deckschicht eine Vielzahl an Öffnungen auf, durch die der Wirkstoff austritt.

Vorzugsweise besteht die Deckschicht aus einem thermoplastischen Material, das mit Ausnahme der Öffnungen ansonsten geschlossen ist. Dabei erweist es sich als besonders vorteilhaft, wenn die Deckschicht aus einem Polyolefin besteht. Als Material für die Deckschicht eignen sich beispielsweise Polyethylen oder Polypropylen aber auch Polystyrol, Polyethylen-Terephthalaten, Polyvinylchlorid, Polylactid, thermoplastischen Polyurethan oder beschichtetem Zellglas sowie Blends.

Die Deckschicht weist bis auf die Öffnungen eine für den Wirkstoff undurchlässige Oberfläche auf. Der Bereich der Oberfläche, durch den der Wirkstoff austreten kann, wird als "open area" bezeichnet. Vorzugsweise beträgt die "open area", mehr als 2 %, vorzugsweise mehr als 3 %, insbesondere mehr als 4 %. Die "open area" ist vorzugsweise kleiner als 50 %, insbesondere kleiner als 40 %. Besonders günstig erweist es sich, wenn die "open area" im Bereich zwischen 4 und 35 % liegt.

Weitere Vorteile und Merkmale der Erfindung ergeben sich aus der Beschreibung von Ausführungsbeispielen anhand von Zeichnungen und aus den Zeichnungen selbst. Dabei zeigt:
- Figur 1: einen Beutel zum Korrosionsschutz,
- Figur 2: einen Beutel mit einer Einlage zum Korrosionsschutz,
- Figur 3: ein Band zum Korrosionsschutz,
- Figur 4: eine Schnittdarstellung durch einen Verbund mit einer Deckschicht, deren Ausstülpungen von der Kleberschicht wegragen,
- Figur 5: einen Schnitt durch einen Verbund mit einer Deckschicht, deren Ausstülpungen zur Klebstoffschicht hinragen,
- Figur 6: eine schematische Darstellung eines Verfahrens zur Herstellung der Deckschicht,
- Figur 7a: die Deckschicht während des Herstellungsprozesses in einem Anfangsstadium,
- Figur 7b: die Deckschicht während des Herstellungsprozesses in einem Endstadium,
- Figur 7c: einen Schnitt durch die erkaltete Deckschicht.

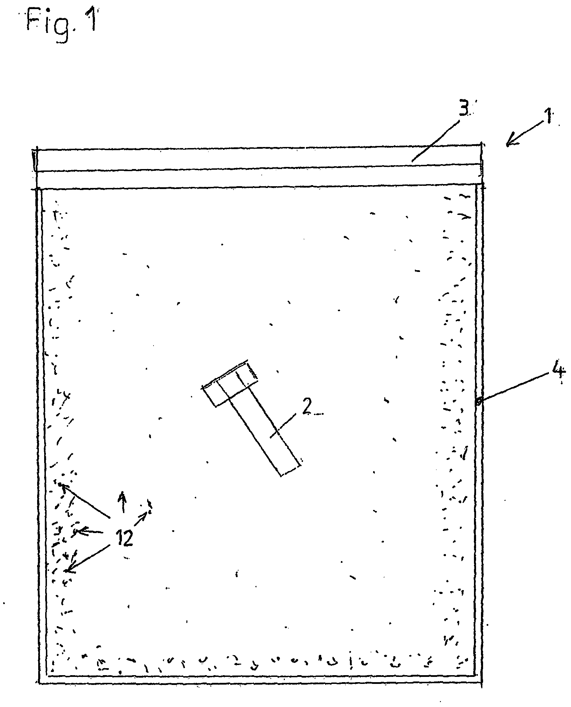

Figur 1 zeigt schematisch eine Anordnung zum Korrosionsschutz, die als Beutel 1 ausgeführt ist. Ein korrosionsanfälliger Gegenstand 2 ist in dem Beutel 1 angeordnet. Der Beutel 1 verfügt über einen Zip-Verschluss 3. Der Beutel besteht aus Verbund 4, der mehrere Folienschichten umfasst. Bei der Variante gemäß Figur 1 ist wird ein Korrosionsinhibitor 12 von dem Beutel 1 selbst an die Innenseite des Beutels 1 zum Korrosionsschutz des Gegenstandes 2 abgegeben. Der Korrosionsinhibitor 12 ist rein schematisch als schwarze Punkte dargestellt.

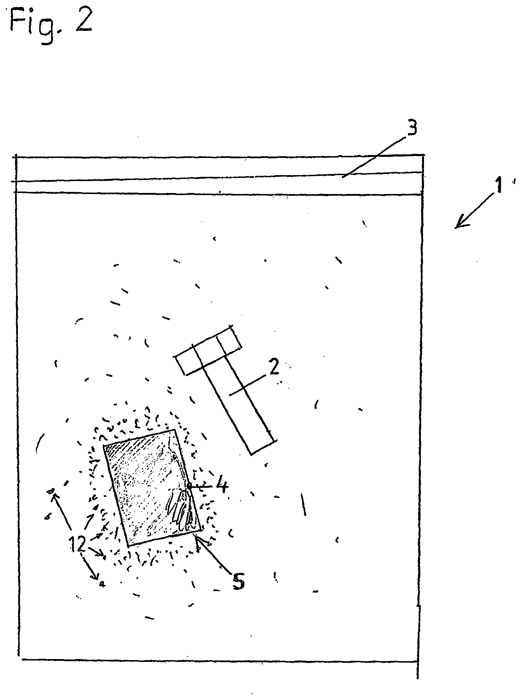

Figur 2 zeigt eine Anordnung zum Korrosionsschutz bei dem in einem herkömmlichen Beutel 1 ohne VCI-Wirkstoffe ein blattartiges Element 5 aus einem Verbund 4 enthalten ist, welches einen Korrosionsinhibitor 12 abgibt. Der Vorteil dieser Variante besteht darin, dass der Beutel 1 selbst aus einem preiswerten Folienmaterial gefertigt ist, das keinen Korrosionsinhibitor 12 aufweist.

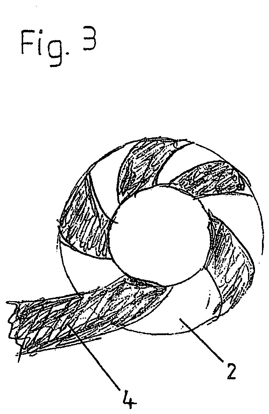

Figur 3 zeigt eine Variante bei welcher ein Verbund 4 als bandartiges Material ausgeführt ist, das um einen Gegenstand 2 zum Korrosionsschutz herumgewickelt wird.

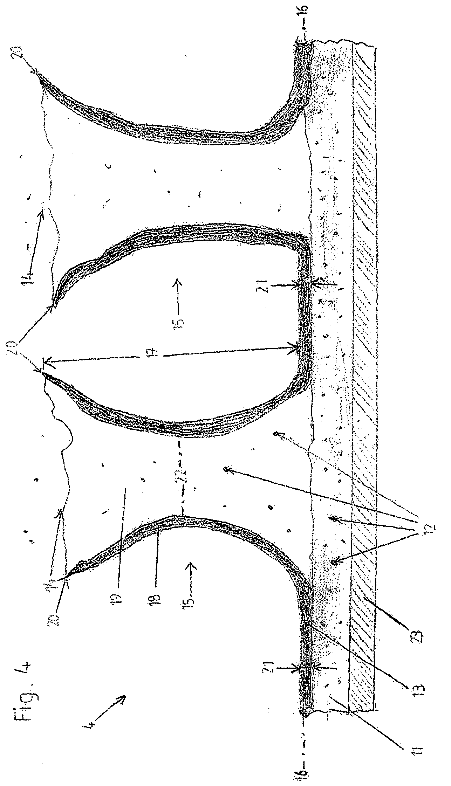

Figur 4 zeigt eine schematische Darstellung eines Verbundes 4. Der Verbund 4 umfasst eine Klebstoffschicht 11, die einen Korrosionsinhibitor 12 enthält. Die Klebstoffschicht 11 ist dauerhaft mit einer Deckschicht 13 verbunden. Die Deckschicht 13 besteht aus einem thermoplastischen Material und weist eine Vielzahl an Öffnungen 14 zur Abgabe des korrosionshemmenden Wirkstoffs 12 auf. Als Deckschicht 13 wird im Ausführungsbeispiel eine Folie aus einem Polyethylen oder einem Polypropylen verwendet.

Die Klebstoffschicht 11 besteht im Ausführungsbeispiel aus einem auf Isocyanaten basierenden Klebstoff und enthält einen Korrosionsinhibitor 12. Bei dem Korrosionsinhibitor 12 kann es sich um ein Salz handeln, beispielsweise Nitrit-Verbindungen oder Aminsalze wie Dicyclohexylamin-Benzoat oder Diethanolamin-Nitrit. Im Ausführungsbeispiel wird als Korrosionsinhibitor 12 eine chemische Verbindung aus Ethanolamin und einer Carbonsäure (Carboxylat und Amid) eingesetzt, die einen Wassergehalt von ungefähr 2 % aufweist. Der Wassergehalt des Korrosionsinhibitors bewirkt ein Aufschäumen der Klebstoffschicht und folglich eine Oberflächenvergrößerung dieser Schicht. Auf diese Weise wird eine große Oberfläche zur Verfügung gestellt, von der aus die Wirksubstanz für den Korrosionsschutz verdampfen und sich auf der Oberfläche des zu schützenden Metallgegenstandes niederschlagen kann.

Zweckmässig wird als Klebstoff ein chemisch abbindender Reaktionsklebstoff eingesetzt. Im Ausführungsbeispiels wird ein lösungsmittelfreier Klebstoff eingesetzt. Dieser basiert vorzugsweise auf aliphatischen und/oder aromatischen Isocyanaten. Besonders bevorzugt wird als Klebstoff ein PUR-Klebstoff eingesetzt. Der Klebstoff weist zweckmäßig einen NCO-Gehalt von 8 bis 9 Gew.-% auf. Das im VCI-Wirkstoff enthaltene Wasser kann mit den Isocyanatgruppen des Klebstoffes unter Bildung von CO₂ reagieren.

Die Klebstoffschicht 11 kann gleichmäßig und flächig oder in einem Muster aus Klebstoffflächen und klebstofffreien Flächen aufgebracht werden. Es ist auch eine Auftragung als Sprühkleber und/oder Pulverstreuer möglich, insbesondere bei Flachbettanlagen.

Erfindungsgemäß weist die Deckschicht 13 Ausstülpungen 15 auf, die aus einer Ebene 16 der Deckschicht 13 um eine Höhe 17 vorragen.

Jede Ausstülpung 15 weist eine Wandung 18 auf, die einen Hohlraum 19 bildet und eine Öffnung 14 umschließt. Die Öffnungen 14 werden von den äußeren Rändern 20 der Ausstülpungen 15 umschlossen. Die Hohlräume 19 erstrecken sich von der Klebstoffschicht 11 bis zu den Öffnungen 14.

Die Höhe 17 der Ausstülpungen 15 sind um mehr als den Faktor 5, insbesondere mehr als den Faktor 10 größer als die Dicke 21 der Ebene 16 der Deckschicht 13.

Im Ausführungsbeispiel weisen die Hohlräume 19 einen engsten Querschnitt 22 auf. Ausgehend von diesem engsten Querschnitt 22 erweitert sich der Querschnitt der Hohlräume 19 zu den Öffnungen 14 und/oder zur Klebstoffschicht 11 hin. Der von dem äußeren Rand 20 jeder Ausstülpung 15 begrenzte Querschnitt bildet die Öffnung 14. Der Querschnitt der Öffnung 14 ist größer als der engste Querschnitt 22 eines Hohlraums 19.

Die Ebene 16 der Deckschicht 13 bildet die glatte Seite der Deckschicht 13. Die Ausstülpungen 15 der Deckschicht 13 bilden die strukturierte Seite der Deckschicht 13, die eine dreidimensionale Gestaltung aufweist.

Der Querschnitt des Hohlraums 19 nimmt in axialer Richtung von der Stelle des engsten Querschnitts 22 bis zum freien Rand 20 der Ausstülpungen 15 zu. Der engste Querschnitt 22 des Hohlraums 19 ist in einer Ebene gelegen, welche zu der Ebene 16 der Deckschicht 13 benachbart ist und welche sich in einem Abstand von dem freien Rand 20 der Ausstülpungen 15 befindet.

Der äußere Rand 20 der Ausstülpungen 15 weist eine unregelmäßig gelappte bzw. gefaltete Form auf. Bei dem in Figur 4 dargestellten Ausführungsbeispiel liegt die Ebene 16 der Deckschicht 13 auf der Klebstoffschicht 11 auf.

Die Klebstoffschicht 11 verbindet die Deckschicht 13 mit der Fläche 23. Bei der Fläche 23 handelt es sich um eine Trägerschicht, die im Ausführungsbeispiel aus einem Polyethylen besteht.

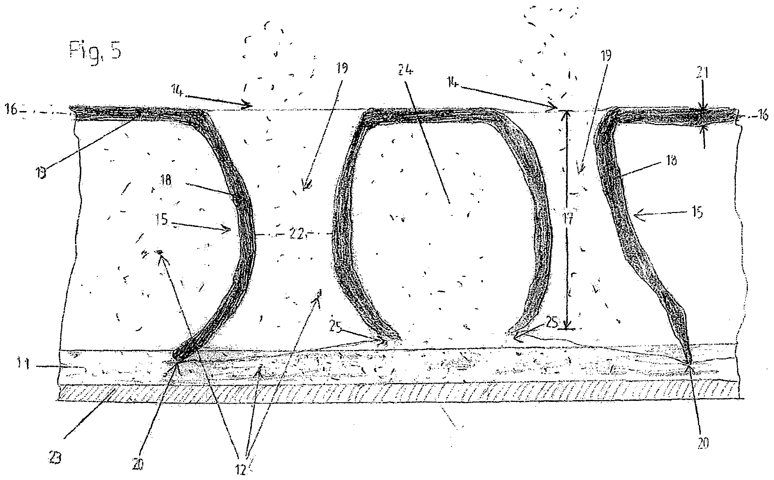

Figur 5 zeigt eine Variante der Erfindung, bei der die Öffnungen 14 in der Ebene 16 der Deckschicht angeordnet sind und die Ausstülpungen 15 zur Klebstoffschicht 11 hinragen. Die Ebene 16 ist bei der in Figur 5 dargestellten Variante beabstandet zur Klebstoffschicht 11 angeordnet. Der äußere Rand 20 der Ausstülpungen 15 ragt zumindest teilweise in die Klebstoffschicht 11.

Zwischen benachbarten Ausstülpungen 15 werden dadurch Räume 24 gebildet. In den Räumen 24 kommt es zu einer Anreicherung des Wirkstoffs 12. Da der äußere Rand 20 der Ausstülpungen 15 eine unregelmäßige Struktur aufweist, gibt es Verbindungsstellen 25, durch die der Korrosionsinhibitor 12 aus den Räumen 24 in die Hohlräume 19 wandert und dann über die Öffnungen 14 abgegeben wird. Durch diese Konstruktion wird die Wirksamkeit bei der Anwendung der Anordnung erhöht, da es zu einer Anreicherung des flüchtigen Korrosionsinhibitor 12 kommt. Dies ist insbesondere vorteilhaft bei Korrosionsinhibitoren 12, die einen verhältnismäßig geringen Dampfdruck aufweisen.

Bei dem erfindungsgemäßen Verfahren zur Herstellung einer Anordnung zum Korrosionsschutz kommen mehrere Schritte zum Einsatz. Der Korrosionsinhibitor 12 wird in einen Klebstoff eingebracht. Im Ausführungsbeispiel handelt es sich um einen Korrosionsinhibitor 12, der durch Reaktion einer Aminkomponente und einer Carbonsäure unter Wasserabspaltung gebildet wird. Der Wassergehalt des Wirkstoffes kann so eingestellt werden, dass die Aminkomponente beim Aushärten des Klebstoffes quantitativ in der Klebstoffschicht gebunden und/oder verbraucht wird.

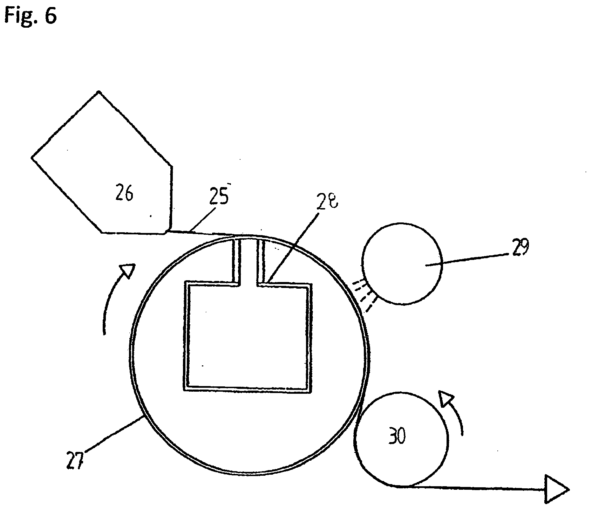

Die erfindungsgemäße Deckschicht 13 wird bei dem in Figur 6 dargestellten Verfahrensschema aus einem Polymerfilm 25 im schmelzflüssigen Zustand hergestellt. Eine solche Art der Herstellung wird auch als "inline-perforation" bezeichnet. Wie bereits ausgeführt, kann die Deckschicht 13 auch auf Basis einer erwärmten Folie hergestellt werden, wobei ein solches Verfahren dann als "offline-perforation" bezeichnet wird.

Bei der "inline-perforation" wird der schmelzflüssige Polymerfilm aus einem Breitschlitzwerkzeug 26 auf ein Element 27 aufgebracht, das Löcher aufweist. Bei dem Element 27 handelt es sich im Ausführungsbeispiel um einen rotierenden Zylinder der Bohrungen aufweist. Mittels einer Unterdruckvorrichtung 28 wird eine Druckdifferenz erzeugt. Der Polymerfilm 25 wird durch die Unterdruckvorrichtung 28 in den perforierten Zylinder gesaugt. Dadurch wird die Polymerschmelze als langgestreckte Ausstülpungen 15 ausgebildet.

Nach der Abkühlung des Films durch eine Kühleinrichtung 29 wird die Deckschicht 13 mittels einer Walze 30 abgeführt.

Die Deckschicht 13 wird dann mit einer als Trägerschicht ausgebildeten Fläche 23 über den wirkstoffhaltigen Klebstoff verbunden. Dazu wird eine Klebstoffschicht 11 mittels einer Rasterwalze (nicht dargestellt) auf die Trägerschicht aufgebracht. Die Trägerschicht wird mit der Deckschicht 13 kaschiert.

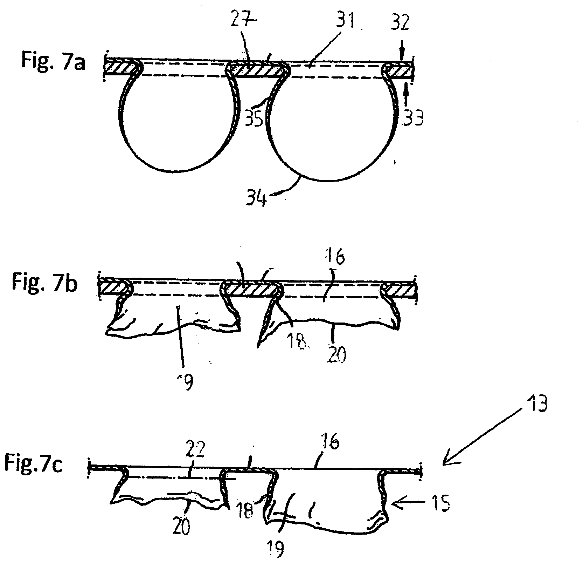

Die Figuren 7a und 7b zeigen zwei Stadien während des Herstellungsprozesses der Deckschicht 13. Auf dem Element 27, dessen Dicke in der Größenordnung von 0,2 mm liegt sind Löcher 31 gleichmäßig verteilt. Die Löcher 31 weisen einen Durchmesser von mehr als 0,4 mm, insbesondere mehr als 0,6 mm und weniger als 1,2 mm, insbesondere weniger als 1,0 mm, auf. Bei den Darstellungen gemäß Fig. 7a und 7b ist eine heißplastische Folie aufgelegt, deren Ausgangsdicke vorzugsweise zwischen 15 µm und 70 µm liegt.

Durch einen Differenzdruck, der von der Folienoberseite 32 zur Folienunterseite 33 wirkt wird das Folienmaterial durch die Löcher 31 hindurch in Form von Blasen 34 verformt. Der Durchmesser der Blasen ist größer als der Durchmesser der Löcher 31. Dadurch verformt sich das Folienmaterial in einem Bereich 35 seitlich über die Lochgrenzen hinaus.

Infolge des über den Elastizitätgrad hinausgehenden Verformungsgrades und aufgrund der Abkühlung, die das Folienmaterial insbesondere im Bereich der Berührung in der Nähe des Elements 27 erfährt, findet eine Rückverformung nur beschränkt statt. Im Bereich 35 bleibt der den Lochdurchmesser übersteigende größere Durchmesser des Blasenmaterials größtenteils erhalten, während der Materialanteil, der zuvor die Blasenkuppel bildete, sich weitgehend zum Bereich 35 hin zurückzieht. Da der Vorgang des Berstens nicht geometrisch gleichmäßig verläuft, bildet sich ein Rand 20 mit einer lappigen, welligen, ungleichmäßigen, rissigen und/oder faltigen Struktur aus.

Wenn im weiteren Verlauf des Verfahrens die Folie von dem Element 27 abgenommen wird, lassen sich die gebildeten Ausstülpungen 15 zwar aus den Löchern 31 des Elements 27 herausziehen; jedoch behalten sie die in Figur 7c veranschaulichte, erweiterte Randform bei, die für das besonders vorteilhafte Verhalten mitverantwortlich ist.

Die Form der Hohlräume 19 ist dadurch geprägt, dass ihr Durchmesser ausgehende von der Ebene 16 bis zum engsten Querschnitt 22 hin abnimmt und dann zum Rand 20 wieder zunimmt. Der engste Durchmesser des Hohlraums liegt zweckmäßigerweise zwischen 0,2 und 2 mm, vorzugsweise zwischen 0,3 und 1,3 mm.

Die Deckschicht 13 wirkt äußert hautsympathisch. Dies liegt an dem verhältnismäßig großen Verhältnisses der Öffnungsfläche zur Gesamtfläche. Die Deckschicht 13 ist weich aber trotzdem zugfest. Die Weichheit begründet sich durch die Nachgiebigkeit der ausgedünnten Ausstülpungsränder. Die guten Festigkeitswerte sind darauf zurückzuführen, dass die Zonen des geringsten Durchmessers der Ausstülpungen, in denen bei Zugbeanspruchung der Folie die größten Spannungen auftreten, nicht gleichzeitig die Öffnungen bilden und daher nicht durch Kerbwirkungen oder Anteile besonders geringer Materialdichte geschwächt sind.

Als Material zur Herstellung der Deckschicht 13 werden Polyolefine bevorzugt, einschließlich deren Homopolymere, Mischungen von Homopolymeren, Copolymere, Mischungen von verschiedenen Copolymeren sowie Mischungen von Copolymeren und Homopolymeren.

## Patentansprüche

1. Anordnung zum Korrosionsschutz mit einer Klebstoffschicht (11), die mindestens einen flüchtigen Korrosionsinhibitor (12) enthält, wobei die Klebstoffschicht (11) auf einer Fläche (23) haftet und die Klebstoffschicht (11) eine Deckschicht (13) mit der Fläche (23) verbindet, wobei die Deckschicht (13) eine Vielzahl von Öffnungen (14) zur Abgabe des flüchtigen Korrosionsinhibitors (12) aufweist, **dadurch gekennzeichnet, dass** die Deckschicht (13) Ausstülpungen (15) aufweist, die aus einer Ebene (16) der Deckschicht (13) um eine Höhe (17) hervorragen und die Öffnungen (14) von den Ausstülpungen (15) gebildet werden, wobei zur Herstellung der Deckschicht (13) ein thermoplastisches Material über ein Element (27) geführt wird, das Löcher (31) aufweist, zum Einziehen von thermoplastischen Material in die Löcher (31) durch einen Differenzdruck, wobei sich durch Ausdünnen von thermoplastischen Material im Bereich der Löcher (31) die Öffnungen (14) bilden und sich die Deckschicht (13) mit den Ausstülpungen (15) unter Erkaltung des thermoplastischen Materials ausbildet.

2. Anordnung nach Anspruch 1, **dadurch gekennzeichnet, dass** die Fläche (23) von einer Außenseite eines Verpackungsmaterials gebildet wird.

3. Anordnung nach Anspruch 1 oder 2, **dadurch gekennzeichnet, dass** die Deckschicht (13) eine innenseitige Schicht eines Verpackungsmaterials bildet..

4. Anordnung nach einem der Ansprüche 1 bis 3, **dadurch gekennzeichnet, dass** jede Ausstülpung (15) eine Wandung (18) aufweist, die einen Hohlraum (19) bildet und eine Öffnung (14) umschließt,

5. Anordnung nach Anspruch 4, **dadurch gekennzeichnet, dass** sich der Querschnitt des Hohlraums (19) ausgehend von einem engsten Querschnitt (22) zur Öffnung (14) hin erweitert.

6. Anordnung nach einem der Ansprüche 1 bis 5, **dadurch gekennzeichnet, dass** die Höhe (17) der Ausstülpungen (15) um mehr als den Faktor 5, insbesondere mehr als den Faktor 10, größer ist als eine Dicke (21) der Ebene (16) der Deckschicht (13).

7. Anordnung nach einem der Ansprüche 1 bis 6, **dadurch gekennzeichnet, dass** die Höhe (17) der Ausstülpungen (15) mehr als 100 µm, insbesondere mehr als 300 µm beträgt.

8. Anordnung nach einem der Ansprüche 1 bis 7, **dadurch gekennzeichnet, dass** die Höhe (17) der Ausstülpungen (15) weniger als 1500 µm, insbesondere weniger als 1000 µm beträgt.

9. Anordnung nach einem der Ansprüche 1 bis 8, **dadurch gekennzeichnet, dass** die Ausstülpungen (15) von der Klebstoffschicht (11) wegragen und die Öffnungen (14) vom einem äußeren Rand (20) der Ausstülpungen (15) gebildet werden.

10. Anordnung nach einem der Ansprüche 1 bis 8, **dadurch gekennzeichnet, dass** die Ausstülpungen (15) zur Klebstoffschicht (13) hinragen und die Öffnungen (14) in der Ebene (16) der Deckschicht (13) angeordnet sind.

11. Anordnung nach Anspruch 10, **dadurch gekennzeichnet, dass** zwischen benachbarten Ausstülpungen (15) Räume (24) gebildet werden.

12. Anordnung nach einem der Ansprüche 1 bis 11, **dadurch gekennzeichnet, dass** ein äußerer Rand (20) der Ausstülpungen (15) eine unregelmäßig gelappte und/oder gefaltete Form aufweist.

13. Verfahren zur Herstellung einer Anordnung nach einem der Ansprüche 1 bis 12 umfassend folgende Schritte:
- Einbringen eines flüchtigen Korrosionsinhibitors (12) in einen Klebstoff,
- Führen eines thermoplastischen Materials über ein Element (27), das Löcher (31) aufweist,
- Einziehen von thermoplastischen Material in die Löcher (31) durch einen Differenzdruck,
- Ausdünnen von thermoplastischen Material im Bereich der Löcher (31), so dass sich Öffnungen (14) in der Deckschicht (13) bilden,
- Ausbildung einer Deckschicht (13) mit Ausstülpungen (15) unter Erkaltung des thermoplastischen Materials,
- Verbinden der Deckschicht (13) mit einer Fläche (23) über den wirkstoffhaltigen Klebstoff.

14. Verfahren nach Anspruch 13, **dadurch gekennzeichnet, dass** das thermoplastische Material als Schmelze auf das Element (27) aufgebracht wird.

15. Verfahren nach Anspruch 13, **dadurch gekennzeichnet, dass** das thermoplastische Material als erwärmte Folie über das Element (27) geführt wird.

16. Verfahren nach einem der Ansprüche 13 bis 15, **dadurch gekennzeichnet, dass** der Klebstoff als Klebstoffschicht (11) auf die Fläche (23) und/oder die Deckschicht (13) aufgebracht wird.

## Claims

1. Corrosion protection arrangement comprising an adhesive layer (11) containing at least one volatile corrosion inhibitor (12), wherein the adhesive layer (11) sticks to a surface (23) and the adhesive layer (11) bonds an outer layer (13) to the surface (23), wherein the outer layer (13) has a multitude of orifices (14) for release of the volatile corrosion inhibitor (12), **characterized in that** the outer layer (13) has protuberances (15) which project out of a plane (16) of the outer layer (13) by a height (17) and the orifices (14) are formed by the protuberances (15), wherein, for production of the outer layer (13), a thermoplastic material is guided over an element (27) having holes (31), for drawing thermoplastic material into the holes (31) by virtue of a pressure differential, wherein the orifices (14) form through thinning-out of thermoplastic material in the region of the holes (31), and the outer layer (13) forms with the protuberances (15) while cooling the thermoplastic material.

2. Arrangement according to Claim 1, **characterized in that** the surface (23) is formed by an outer face of a packaging material.

3. Arrangement according to Claim 1 or 2, **characterized in that** the outer layer (13) forms an inner layer of a packaging material.

4. Arrangement according to any of Claims 1 to 3, **characterized in that** each protuberance (15) has a wall (18) which forms a cavity (19) and surrounds an orifice (14).

5. Arrangement according to Claim 4, **characterized in that** the cross section of the cavity (19) increases from a narrowest cross section (22) toward the orifice (14).

6. Arrangement according to any of Claims 1 to 5, **characterized in that** the height (17) of the protuberances (15) is greater by more than a factor of 5, especially more than a factor of 10, than a thickness (21) of the plane (16) of the outer layer (13).

7. Arrangement according to any of Claims 1 to 6, **characterized in that** the height (17) of the protuberances (15) is more than 100 µm, especially more than 300 µm.

8. Arrangement according to any of Claims 1 to 7, **characterized in that** the height (17) of the protuberances (15) is less than 1500 µm, especially less than 1000 µm.

9. Arrangement according to any of Claims 1 to 8, **characterized in that** the protuberances (15) project away from the adhesive layer (11) and the orifices (14) are formed by an outer edge (20) of the protuberances (15).

10. Arrangement according to any of Claims 1 to 8, **characterized in that** the protuberances (15) project toward the adhesive layer (11) and the orifices (14) are arranged in the plane (16) of the outer layer (13).

11. Arrangement according to Claim 10, **characterized in that** spaces (24) are formed between adjacent protuberances (15).

12. Arrangement according to any of Claims 1 to 11, **characterized in that** an outer edge (20) of the protuberances (15) has an irregularly lobed and/or folded form.

13. Process for producing an arrangement according to any of Claims 1 to 12, comprising the following steps:
- introducing a volatile corrosion inhibitor (12) into an adhesive,
- guiding a thermoplastic material through an element (27) having holes (31),
- drawing thermoplastic material into the holes (31) by virtue of a pressure differential,
- thinning out thermoplastic material in the region of the holes (31) such that orifices (14) form in the outer layer (13),
- forming an outer layer (13) with protuberances (15) while cooling the thermoplastic material,
- bonding the outer layer (13) to a surface (23) by means of the active ingredient-containing adhesive.

14. Process according to Claim 13, **characterized in that** the thermoplastic material is applied to the element (27) as a melt.

15. Process according to Claim 13, **characterized in that** the thermoplastic material is guided through the element (27) as a heated film.

16. Process according to any of Claims 13 to 15, **characterized in that** the adhesive is applied to the surface (23) and/or the outer layer (13) as an adhesive layer (11).

## Revendications

1. Ensemble pour la protection contre la corrosion avec une couche de colle (11), qui contient au moins un inhibiteur de corrosion volatil (12), dans lequel la couche de colle (11) adhère à une face (23) et la couche de colle (11) assemble une couche de recouvrement (13) à la face (23), dans lequel la couche de recouvrement (13) présente une multiplicité d'ouvertures (14) pour la délivrance de l'inhibiteur de corrosion volatil (12), **caractérisé en ce que** la couche de recouvrement (13) présente des protubérances (15), qui sortent d'un plan (16) de la couche de recouvrement (13) d'une hauteur (17) et les ouvertures (14) sont formées par les protubérances (15), dans lequel pour la production de la couche de recouvrement (13) on guide un matériau thermoplastique au-dessus d'un élément (27), qui présente des trous (31) pour attirer du matériau thermoplastique dans les trous (31) par une différence de pression, dans lequel les ouvertures (14) se forment par raréfaction de matériau thermoplastique dans la région des trous (31) et la couche de recouvrement (13) avec les protubérances (15) se forme par refroidissement du matériau thermoplastique.

2. Ensemble selon la revendication 1, **caractérisé en ce que** la face (23) est formée par un côté extérieur d'un matériau d'emballage.

3. Ensemble selon la revendication 1 ou 2, **caractérisé en ce que** la couche de recouvrement (13) forme une couche intérieure d'un matériau d'emballage.

4. Ensemble selon l'une quelconque des revendications 1 à 3, **caractérisé en ce que** chaque protubérance (15) présente une paroi (18), qui forme une cavité (19) et qui entoure une ouverture (14).

5. Ensemble selon la revendication 4, **caractérisé en ce que** la section transversale de la cavité (19) s'élargit à partir d'une section transversale très étroite (22) en direction de l'ouverture (14).

6. Ensemble selon l'une quelconque des revendications 1 à 5, **caractérisé en ce que** la hauteur (17) des protubérances (15) est plus grande de plus d'un facteur 5, en particulier de plus d'un facteur 10, qu'une épaisseur (21) du plan (16) de la couche de recouvrement (13).

7. Ensemble selon l'une quelconque des revendications 1 à 6, **caractérisé en ce que** la hauteur (17) des protubérances (15) vaut plus de 100 µm, en particulier plus de 300 µm.

8. Ensemble selon l'une quelconque des revendications 1 à 7, **caractérisé en ce que** la hauteur (17) des protubérances (15) vaut moins de 1500 µm, en particulier moins de 1000 µm.

9. Ensemble selon l'une quelconque des revendications 1 à 8, **caractérisé en ce que** les protubérances (15) s'éloignent de la couche de colle (11) et les ouvertures (14) sont formées par un bord extérieur (20) des protubérances (15).

10. Ensemble selon l'une quelconque des revendications 1 à 8, **caractérisé en ce que** les protubérances (15) se dirigent vers la couche de colle (11) et les ouvertures (14) sont disposées dans le plan (16) de la couche de recouvrement (13).

11. Ensemble selon la revendication 10, **caractérisé en ce que** des espaces (24) sont formés entre des protubérances voisines (15).

12. Ensemble selon l'une quelconque des revendications 1 à 11, **caractérisé en ce qu'**un bord extérieur (20) des protubérances (15) présente une forme irrégulièrement lobée et/ou pliée.

13. Procédé de fabrication d'un ensemble selon l'une quelconque des revendications 1 à 12, comprenant les étapes suivantes:
- introduire un inhibiteur de corrosion volatil (12) dans une colle,
- guider un matériau thermoplastique au-dessus d'un élément (27), qui présente des trous (31),
- attirer du matériau thermoplastique dans les trous (31) par une différence de pression,
- raréfier le matériau thermoplastique dans la région des trous (31), de telle manière qu'il se forme des ouvertures (14) dans la couche de recouvrement (13),
- former une couche de recouvrement (13) avec des protubérances (15) par refroidissement du matériau thermoplastique,
- joindre la couche de recouvrement (13) à une face (23) au moyen de la colle contenant une substance active.

14. Procédé selon la revendication 13, **caractérisé en ce que** l'on dépose le matériau thermoplastique sous forme fondue sur l'élément (27).

15. Procédé selon la revendication 13, **caractérisé en ce que** l'on guide le matériau thermoplastique sous forme de feuille chauffée au-dessus de l'élément (27).

16. Procédé selon l'une quelconque des revendications 13 à 15, **caractérisé en ce que** l'on dépose la colle sous forme de couche de colle (11) sur la face (23) et/ou la couche de recouvrement (13).
